# EUROPÄISCHE PATENTSCHRIFT

(11) **EP 0 740 758 B1**
(45) Veröffentlichungstag und Bekanntmachung des Hinweises auf die Patenterteilung: **28.10.1998**
(21) Anmeldenummer: 95905140.0
(22) Anmeldetag: 13.01.1995
(51) Int. Cl.: F21V 7/22, B29C 45/00, C03C 14/00

(54) **HOCHWÄRMEBELASTBARE FORMTEILE**
STRONGLY HEAT-RESISTANT MOULDINGS
PIECES MOULEES A HAUTE RESISTANCE A LA CHALEUR

(30) Priorität: 22.01.1994 DE 4401813
(43) Veröffentlichungstag der Anmeldung: 06.11.1996
(73) Patentinhaber: Hella KG Hueck & Co., 59552 Lippstadt (DE)
(72) Erfinder: HEGEMANN, Klaus, D-59558 Lippstadt (DE); SCHMITZ, Konrad, D-59558 Lippstadt (DE)
(86) Internationale Anmeldenummer: EP9500120
(87) Internationale Veröffentlichungsnummer: WO9520129

(56) Entgegenhaltungen:
- EP-A- 0 365 236
- EP-A- 0 459 229
- EP-A- 0 523 497
- EP-A- 0 566 866
- FR-A- 2 640 189

## Beschreibung

Gegenstand der Erfindung sind hoch wärmebelastbare ScheinwerferReflektoren, Lampenfassungen und Abschatter von Fahrzeugleuchten oder Fahrzeugscheinwerfern, hergestellt durch Spritzgießen und/oder Spritzpressen.

Fahrzeugleuchten und Fahrzeugscheinwerfer bestehen aus einer Vielzahl von Formteilen, die mit zunehmender Verkleinerung der Bauteile einer erhöhten Wärmebelastung ausgesetzt sind. Insbesondere sind Lampenreflektorhohlkörper, bedingt durch die kleinere Bauart von Fahrzeugleuchten und/oder Fahrzeugscheinwerfern den Anforderung der Designer entsprechend, außerordentlich hohen Wärmebelastungen ausgesetzt. Gesetzliche Vorschriften verlangen jedoch eine außerordentliche Genauigkeit und Stabilität einer eingestellten Strahlungsleistung und Strahlungsrichtung. Dementsprechend ist es erforderlich, daß hoch wärmebelastete Formteile von Fahrzeugleuchten und/oder Scheinwerfern eine Reihe von Mindestkriterien erfüllen, damit diese ihrem Einsatzzweck entsprechend einsetzbar sind. So ist beispielsweise eine außerordentliche mechanische Formstabilität der Formteile erforderlich, die zu einer hohen Abbildegenauigkeit führt. Beispielhaft sei hier auf Reflektoren von Scheinwerfern verwiesen, die sich auch unter Wärmeeinwirkung praktisch nicht verformen dürfen, da anderenfalls die Strahlungsrichtung, beispielsweise der Neigungswinkel des Abblendlichts verändert wird. Ebenso sind hohe Anforderungen an die Schlagfestigkeit der Materialien zu stellen, da bei der Montage, beim Betrieb und bei der Instandsetzung einer Fahrzeugleuchte und eines Fahrzeugscheinwerfers derartige Schlageinwirkungen nicht ausgeschlossen werden können.

Zur Einhaltung der besonderer Güte der Abbildegenauigkeit, insbesondere beim Verstellen des Reflektors, in Abhängigkeit der Fahrzeugbeladung, ist darüber hinaus eine hohe Verformungsfestigkeit der eingesetzten Formteile erforderlich.

Bedingt durch die hohe Wärmeabstrahlung, insbesondere von Lampen, vornehmlich Fahrzeuglampen und Fahrzeugscheinwerfern mit hoher Lichtleistung, tritt eine hohe Wärmebelastung in verschiedensten Bauteilen einer Fahrzeugleuchte oder eines Fahrzeugscheinwerfers auf. Dementsprechend ist eine gute Wärmefestigkeit Voraussetzung für hoch wärmebelastbare Formteile. Thermoplastische Materialien sind aufgrund der bei höheren Temperaturen auftretenden Erweichung in der Regel weniger geeignet, da die Wärmefestigkeit in der Regel nicht ausreichend ist. Darüber hinaus ist auch erforderlich, daß der thermische Ausdehnungskoeffizient der Materialien zur Einhaltung der Abbildegenauigkeit möglichst gering ist. Ein weiteres Kriterium, das bei der Herstellung von hoch wärmebelastbaren Formteilen für Fahrzeugleuchten oder Fahrzeugscheinwerfer einzuhalten gilt, ist ein geringes Schwindmaß der einzusetzenden Materialien, damit eine gut reproduzierbare Serienproduktion mit hoher Fertigungsgenauigkeit durchgeführt werden kann.

Zur Erfüllung sämtlicher Anforderungen werden bis in die heutige Zeit vielfach metallische Formteile, beispielsweise Reflektoren eingesetzt, die wiederum metallverarbeitungstechnische Nachteile beinhalten. Für Scheinwerferreflektoren aus Kunststoff, hier insbesondere für solche nach dem ECE-Reglement, sind entsprechend nur Formstoffe mit hoher Formtreue, das heißt niedrigster Schwindung, niedrigstem Längenausdehnungkoeffizient (α-Wert) bei gleichzeitig ausreichend hoher mechanischer Festigkeit geeignet. Diese Anforderungen können in der Regel nicht von thermoplastischen Werkstoffen erfüllt werden, so daß sich im Stand der Technik, insbesondere duroplastische Materialien durchgesetzt haben. Daneben besteht insbesondere bei Reflektoren stets der Wunsch nach hoher Oberflächengüte für eine, den lichttechnischen Anforderungen genügende Direktmetallisierung und niedrigste Ausgasrate zur Vermeidung kritischer Belagbildung auf den Funktionsflächen, das heißt insbesondere der Reflexionsfläche des Scheinwerfers.

Die besten Voraussetzungen für hohe Formtreue, niedrigen α-Wert und niedrige Ausgasrate bieten hier prinzipiell organische, insbesondere duroplastische Formstoffe mit hohen Anteilen mineralischer Füllung. Mit steigendem Füllgrad sind jedoch der funktionsgerechten Direkt-Bedampfbarkeit Grenzen gesetzt, so daß eine Lackierung vor der Metallisierung erforderlich wird. Darüber hinaus sind an sich bekannte Formstoffe mit hohen Füllgraden an mineralischen Füllern außerordentlich schwierig verarbeitbar, da die Fließfähigkeit dieser Stoffe relativ niedrig ist. So werden in der DE 10 28 053 B1 verspiegelte Reflektorträger aus Füllstoff-enthaltendem Kunstharzpreßstoff, insbesondere für Kraftfahrzeugscheinwerfer beschrieben, wobei der auf bekannte Weise durch Aufdampfen einer Metallschicht - insbesondere Aluminiumschicht - im Vakuum verspiegelte Reflektorträger aus einem innigen Gemenge eines feinkörnigen, anorganischen Füllstoffs, insbesondere Gesteinsmehl, mit dem gehärteten Kunstharz, insbesondere einen Phenolformaldehyd-Kunstharz besteht. In bevorzugten Ausführungsformen wird angegeben, daß der Reflektor durch Heißpressen geformter Kunstharzmassen mit etwa 55 - 45 % Gesteinsmehl und 45 - 55 % gehärtetem Phenolformaldehyd-Kunstharz hergestellt werden soll. Zur technischen Realisierung von hoch wärmebelastbaren Formteilen von Fahrzeugleuchten oder Fahrzeugscheinwerfern der derzeitigen Generation ist es jedoch hier erforderlich, vor dem Metallisieren die Oberfläche, insbesondere die Funktionsfläche mit einer glättenden Lackschicht zu versehen, da die Oberflächengenauigkeit der mit mineralischen Füllstoffenteilchen gefüllten Formteile den heutigen Ansprüchen nicht mehr gerecht wird.

EP 0 459 229 A2 betrifft Formmassen aus neutralen Polyarylensulfiden, insbesondere aus Polyphenylensulfid und daraus hergestellte reflektierende Gegenstände wie Leuchten, vorzugsweise Scheinwerfer und Reflektoren.

EP 0 523 497 A2 betrifft hoch temperaturbeständige Lampengehäuse und thermoplastische Kunststoff-Formmassen zu Ihrer Herstellung. Diese werden durch Spritzgießen einer thermoplastischen Kunststoff-Formmasse mit einer Matrix aus thermoplastischem Polymethacrylimid-Kunststoff und einem darin verteilten pulverförmigen anorganischen Füllstoff hergestellt. Die Menge des pulverförmigen anorganischen Füllstoffs kann bis zu 70 Gew.-% betragen. Sämtliche der genannten anorganischen Füllstoffe sind jedoch nicht bei der Spritztemperatur flüssig sondern wie bei Raumtemperatur fest.

Aus der DE 22 44 921 B2 ist ein Verfahren zur Herstellung eines Lampenreflektorhohlkörpers bekannt, der aus einer Glasfaser-verstärkten wärmehärtenden Polyestergießmasse gebildet wird, und dessen Innenfläche mit einem reflektierenden Material versehen wird, das aus einer wärmeaushärtenden Polyestergießmasse mit 1 - 2 Gew.-% Formtrennmittel und 12 - 18 Gew.-% Glasfasern besteht. Aus dem hier referierten Stand der Technik sind eine Reihe von weiteren Materialien, insbesondere zur Herstellung von Lampenreflektorhohlkörpern aus Glasfaser-verstärkten Gießharzen bekannt. Auch hier ist eine Direktmetallisierung nicht möglich, da die Füllstoffe und Glasfasern dem Lampenreflektorhohlkörper eine relativ rauhe Oberfläche verleihen, die nicht für eine hohe Abbildungsgüte geeignet ist.

Ein weiterer Nachteil der im Stand der Technik bekannten hochwärmebelastbaren Scheinwerfer-Reflektoren, Lampenfassungen und Abschattern von Fahrzeugleuchten und Fahrzeug-Scheinwerfern auf der Basis von Duroplasten besteht insbesondere in den relativen langen Zykluszeiten der Herstellung. Die Aushärtung der Gießmassen bedarf verhältnismäßig langer Reaktionszeiten, beispielsweise Reaktionszeiten im Bereich von Minuten, so daß in der Praxis häufig Zykluszeiten unter 60 s kaum realisierbar sind.

Dementsprechend besteht ein Bedarf an hoch wärmebelastbaren Scheinwerfer-Reflektoren, Lampenfassungen und Abschattern von Fahrzeugleuchten oder Scheinwerfern, die durch Spritzgießen hergestellt werden, wobei diese Formteile die wesentlichen der vorgenannten Eigenschaften herkömmlicher ScheinwerferReflektoren, Lampenfassungen und Abschattern metallischer oder duroplastischer Herkunft aufweisen sollen. Darüber hinaus besteht auch ein Bedarf bei der Herstellung von reflektierenden Scheinwerfer-Reflektoren, Lampenfassungen und Abschattern von Fahrzeugleuchten oder Scheinwerfern darin, daß diese eine hohe Oberflächengüte aufweisen, die eine Direktmetallisierung ohne Zwischenlackierung ermöglicht. Hochwärmebelastbare ScheinwerferReflektoren, Lampenfassungen und Abschattern von Fahrzeugleuchten oder Scheinwerfern ohne reflektierende Funktionsflächen sollten in Anbetracht der Taktzeiten des heutigen Automobilbaus in möglichst kurzen Zykluszeiten, beispielsweise im Bereich von deutlich weniger als einer Minute zur Verfügung stehen. Selbstverständlich ist auch die Preiswürdigkeit der Formteile von außerordentlich hoher Bedeutung.

Sämtliche der vorgenannten Anforderungen, bzw. Aufgaben werden in einer ersten Ausführungsform der Erfindung gelöst durch Scheinwerfer-Reflektoren, Lampenfassungen und Abschatter von Fahrzeugleuchten oder Fahrzeugscheinwerfern, hergestellt durch Spritzgießen und/oder Spritzpressen eines Gemisches eines, bei der Spritztemperatur flüssigen, bei Raumtemperatur festen, anorganischen Füllstoffmaterials (A) und einem thermoplastischen Bindemittels (B) mit einem Gewichtsanteil von 70 bis 95 Gew.-% des Füllstoffmaterials (A).

Mit Hilfe der vorliegenden Erfindung können hochwärmebelastbare Scheinwerfer-Reflektoren, Lampenfassungen und Abschattern von Fahrzeugleuchten oder Fahrzeugscheinwerfern durch Spritzgießen erhalten werden, die auch den neueren ECE-Reglementen entsprechen. Die Formteile weisen hohe Formtreue, daß heißt niedrigste Schwindung, niedrigste Längenausdehnungskoeffizienten (α-Wert) bei gleichzeitig ausreichend hoher mechanischer Festigkeit auf. Daneben werden auch die Anforderung an eine hohe Oberflächengüte für eine den lichttechnischen Anforderungen genügende Direktmetallisierung und eine niedrigste Ausgasrate zur Vermeidung kritischer Belagbildung auf den Funktionsflächen, insbesondere den Reflexionsflächen des Scheinwerfers erfüllt.

Bevorzugterweise wird dementsprechend ein Füllstoffmaterial (A) mit einer Dichte bei 20°C von wenigstens 3 g/cm³ und insbesondere einem Wärmeausdehnungskoeffizienten von weniger oder gleich 30 x 10⁻⁶/K eingesetzt, wobei ein möglichst geringer Wärmeausdehnungskoeffizient von besonderer Bedeutung ist. Prinzipiell ist auch der Einsatz von Metallen einer Dichte von weniger als 2 g/cm³ denkbar.

Zur Erfüllung der vorgenannten Aufgaben ist es im Sinne der vorliegenden Erfindung besonders bevorzugt, das Füllstoffmaterial (A) aus niedrigschmelzenden glasartigen und/oder kristallin erstarrenden anorganischen Stoffen, insbesondere niedrigschmelzenden Gläsern, Metallen oder Metall-Legierungen auszuwählen. Voraussetzung für die Einsetzbarkeit der entsprechenden Materialien ist die Möglichkeit der Verarbeitung durch Spritzgießen und/oder Spritzpressen in Anwesenheit eines thermoplastischen Bindemittels (B). Für den Fall, daß die Schmelztemperaturen der einzusetzenden Füllstoffmaterialien (A) zu hoch liegen, wird das thermoplastische Bindemittel (B) beim Spritzgießen und/oder Spritzpressen abgebaut, so daß die Aufgaben dieses Bindemittels (B) nicht ausreichend erfüllt werden können. Wird andererseits ein Füllstoffmaterial (A) eingesetzt, daß einen sehr niedrigen Schmelzpunkt aufweist, so ist die im Sinne der vorliegenden Erfindung geforderte Wärmebeständigkeit der Scheinwerfer-Reflektoren, Lampenfassungen und Abschatter, nicht gegeben, so daß eine praktische Anwendbarkeit der Formteile bei einer hohen Wärmebelastung ausscheidet. Dementsprechend ist es im Sinne der vorliegenden Erfindung besonders bevorzugt, als Füllmaterial (A) niedrigschmelzende anorganische Gläser mit einem Schmelzbereich im Bereich von 230 bis 450°C, insbesondere 320 bis 350 °C, einzusetzen. Ein entsprechendes Füllstoffmaterial (A) in Kombination mit einem thermoplastischen Bindemittel (B) ist im Handel unter der Bezeichnung CORTEM™ erhältlich. Als Verstärkung und Füllstoff wird in CORTEM™ ein niedrigschmelzendes Alkalimetall-Zink-Phosphat-Glas eingesetzt. Dieses Glas liegt bei der normalen Spritzgießverarbeitung als niedrigviskose Schmelze vor. Der sonst übliche Viskositätsanstieg von Polymerschmelzen mit steigendem Füllgrad entfällt also bei der Verwendung derartig niedrigschmelzender Füllstoffmaterialien (A). In gleicher Weise ist auch ein niedrigschmelzendes Zinksulfid-Glas im Sinne der Erfindung einsetzbar.

Während üblicherweise ein hoher Füllgrad zu einer groben Körnung und damit zu einer rauhen Oberfläche führt, ist es im Sinne der vorliegenden Erfindung möglich, das Füllstoffmaterial (A) in flüssiger Form in das Spritzwerkzeug einzubringen, so daß hier eine außerordentliche glatte Oberfläche herstellbar ist. Dementsprechend ist auch bei extrem hohen Füllgraden eine funktionsgerechte Direktbedampfbarkeit möglich.

Wesentliches Kriterium bei der Auswahl der thermoplastischen Bindemittel (B) ist die Wärmebeständigkeit bei der Spritztemperatur und die Wärmebeständigkeit bei der späteren Verwendung in dem hergestellten Formteil. Darüber hinaus ist eine gute Haftung des Polymers zu dem festen anorganischen Füllstoffmaterial (A) erforderlich. Hoch warmformbeständige Thermoplaste im Sinne der vorliegenden Erfindung sind daher vorzugsweise ausgewählt aus flüssig kristallinen Polymeren (LCP, linearen Cellulosepropionat (LCD), Polyetherketonen (PEK), Polyetheretherketonen (PEEK), Polyethersulfonen (PES), Polyetherimiden (PEI) und/oder Polyphenylensulfiden (PPS). Die vorgenannten Thermoplaste zeigen eine exzellent gute Haftung zum niedrigschmelzenden Alkalimetall-Zink-Phosphat-Glas.

Mittels REM-Aufnahmen konnte festgestellt werden, daß die Ausbildung einer verträglichen Phase an der Grenzfläche Glas/-Polymer sehr wahrscheinlich ist. Die Ausbildung einer Feinmorphologie läßt abhängig von der Kompoundier- und Verarbeitungstechnik auch bei Extremfüllungen noch eine funktionsgerechte Direktbedampfbarkeit zu.

Die Warmformbeständigkeit der so erhaltenen ScheinwerferReflektoren, Lampenfassungen und Abschatter liegt in Abhängigkeit von den eingesetzten Materialien möglichst bei etwa 300°C. Die Dauergebrauchstemperatur liegt bei 280°C bei Thermoplasten, bei Duroplasten, wie den genannten Feuchtpolyestern sind 75 bis 80 Gew.-% typisch. Der E-Modul, die Schwindung und der Wärmedehnwert sind abhängig vom Füllgrad und für den Fachmann auf Scheinwerferanwendungen ohne weiteres durch Variation der Mengenbestandteile optimierbar.

Dementsprechend besteht das Konzept der vorliegenden Erfindung darin, daß die Scheinwerfer-Reflektoren, Lampenfassungen und Abschatter überwiegend aus dem Füllstoffmaterial (A), nämlich 70 bis 95 Gew.-% bestehen. Während mit Hilfe von im Stand der Technik bekannten Füllstoffmaterialien (A) Füllstoffgrade von maximal 50 bis 60 Gew.-% möglich sind, wenn beispielsweise flüssig kristalline Polymere eingesetzt werden, sind in der Technik aber praktisch nur Füllstoffgrade im Bereich von 20 bis 30 Gew.-% realisiert worden. Es ist mit Hilfe der vorliegenden Erfindung möglich, den Mengenanteil an anorganischen Füllstoffmaterial (A) in Bereiche zu steigern, die aufgrund des üblichen Viskositätsanstiegs von Polymerschmelze mit steigendem Füllstoffgrad mit üblichen "permanent festen" Füllstoffmaterialien (A) nicht erreichbar sind.

Zur Herstellung der oben beschriebenen Scheinwerfer-Reflektoren, Lampenfassungen und Abschatter wird ein Gemisch eines bei der Spritztemperatur flüssigen, jedoch bei Betriebstemperatur festen anorganischen Füllstoffmaterials (A) und eines thermoplastischen Bindemittels (B) in üblicherweise für das Spritzgießen und/oder Spritzpressen vorbereitet.

Unter Einwirkung hoher Scherkräfte, insbesondere bei Einhaltung sehr kurzer Spritzzeiten im Bereich von 1 s oder weniger ist es möglich, vollständige Scheinwerferreflektoren im Sinne der vorliegenden Erfindung herzustellen, die für eine Direktmetallisierung ohne vorherige Zwischenlackierung geeignet sind. Durch die hohe Scherbelastung während des Spritzgießens und/oder Spritzpressen wird eine sehr kleine Partikelgröße im Bereich von 1 bis 5 µm erreicht, so daß in der anschließenden Abkühlungsphase keine homogene Schmelze entstehen kann. Bedingt durch die geringe Partikelgröße bildet sich jedoch eine sehr glatte Oberfläche, die einer Direktmetallisierung zugänglich ist.

Besonders bevorzugt werden Spritzzeiten im Bereich von weniger als 0,2 s, da hier besonders hohe Scherkräfte auftreten, die zu einer besonders glatten Oberfläche der Formteile führen. Vorzugsweise wird die Spritztemperatur in einem Bereich von 20 bis 100 K, insbesondere 40 bis 70 K oberhalb des Schmelzbereichs des Füllstoffmaterials (A) eingestellt. Weitere Voraussetzungen für die Einstellung einer optimalen Spritztemperatur ist neben dem Schmelzbereich des Füllstoffmaterials (A) selbstverständlich auch die Wärmebeständigkeit des thermoplastischen Bindemittels (B).

## Patentansprüche

1. Scheinwerfer-Reflektoren, Lampenfassungen und Abschatter von Fahrzeugleuchten oder Fahrzeugscheinwerfern, hergestellt durch Spritzgießen und/oder Spritzpressen eines Gemisches eines, bei der Spritztemperatur flüssigen, bei Raumtemperatur festen, anorganischen Füllstoffmaterials (A) und eines thermoplastischen Bindemittels (B) mit einem Gewichtsanteil von 70 bis 95 Gew.-% des Füllstoffmaterials (A).

2. Formteile nach Anspruch 1, dadurch gekennzeichnet, daß das Füllstoffmaterial (A) eine Dichte bei 20°C von wenigstens 3g/cm³ und insbesondere einen Wärmeausdehnungskoeffizienten von weniger oder gleich 30 x 10⁻⁶/K aufweist.

3. Formteile nach Anspruch 1 oder 2, dadurch gekennzeichnet, daß das Füllstoffmaterial (A) ausgewählt ist aus niedrigschmelzenden glasartigen und/oder kristallin erstarrenden anorganischen Stoffen.

4. Formteile nach Anspruch 3, dadurch gekennzeichnet, daß das Füllstoffmaterial ausgewählt ist aus niedrigschmelzenden Gläsern, Metallen und/oder Metallegierungen.

5. Formteile nach Anspruch 4, dadurch gekennzeichnet, daß das niedrigschmelzendes anorganische Glas einen Schmelzbereich im Bereich von 230 bis 450°C, insbesondere 320 bis 350°C aufweist.

6. Formteile nach Anspruch 5, dadurch gekennzeichnet, daß das Glas eine Alkalimetall-Zink-Pyrophosphatstruktur oder eine Zinksufid-Glasstruktur aufweist.

7. Formteile nach Anspruch 1, dadurch gekennzeichnet, daß das thermoplastische Bindemittel (B) ausgewählt ist aus flüssig kristallinen Polymeren (LCP), linearem Cellulosepropionat (LCD), Polyetherketonen (PEK), Polyetheretherketonen (PEEK), Polyethersulfonen (PES), Polyetherimiden (PEI) und/oder Polyphenylensulfiden (PPS) bestehen.

## Claims

1. Headlamp reflectors, lampholders and shading devices of vehicle lamps or vehicle headlamps, produced by the injection moulding and/or transfer moulding of a mixture of an inorganic filler material (A), which is liquid at the moulding temperature and is solid at room temperature, and of a thermoplastic binder (B), with a proportion by weight of 70 to 95 % by weight of the filler material (A).

2. Mouldings according to claim 1, characterised in that the filler material (A) has a density at 20°C of at least 3 g/cm³ and in particular has a thermal expansion coefficient less than or equal to 30 x 10⁻⁶/K.

3. Mouldings according to claims 1 or 2, characterised in that the filler material (A) is selected from low-melting inorganic substances which are glassy and/or which solidify in crystalline form.

4. Mouldings according to claim 3, characterised in that the filler material is selected from low-melting glasses, metals and/or metal alloys.

5. Mouldings according to claim 4, characterised in that the low-melting inorganic glass has a melting range within the range from 230 to 450°C, particularly 320 to 350°C.

6. Mouldings according to claim 5, characterised in that the glass has an alkali metal zinc pyrophosphate structure or a zinc sulphide glass structure.

7. Mouldings according to claim 1, characterised in that the thermoplastic binder (B) is selected from and consists of liquid crystalline polymers (LCP), linear cellulose propionate (LCD), polyether ketones (PEK), polyether ether ketones (PEEK), polyether sulphones (PES), polyether imides (PEI) and/or polyphenylene sulphides (PPS).

## Revendications

1. Réflecteurs de phares, douilles de lampes et obscurcisseurs de lampes de véhicules automobiles ou de phares de véhicules automobiles préparés par moulage par injection et/ou moulage par transfert d'un mélange d'un matériau de charge inorganique (A), liquide à la température d'injection, solide à température ambiante et d'un liant thermoplastique (B) avec une part en poids de 70 à 95% en poids du matériau de charge (A).

2. Pièces moulées selon la revendication 1, caractérisées en ce que le matériau de charge (A) présente une densité à 20°C d'au moins 3g/cm³ et en particulier un coefficient de dilatation thermique inférieur ou égal à 30 x 10⁻⁶/K.

3. Pièces moulées selon la revendication 1 ou 2, caractérisées en ce que le matériau de charge (A) est choisi parmi des matières inorganiques vitreuses de faible point de fusion et/ou se solidifiant de manière cristalline.

4. Pièces moulées selon la revendication 3, caractérisées en ce que le matériau de charge est choisi parmi des verres, des métaux et/ou des alliages métalliques de faible point de fusion.

5. Pièces moulées selon la revendication 4, caractérisées en ce que le verre inorganique de faible point de fusion présente un domaine de fusion de 230 à 450°C, en particulier de 320 à 350°C.

6. Pièces moulées selon la revendication 5, caractérisées en ce que le verre présente une structure de métal alcalin-zinc-pyrophosphate ou une structure de sulfure de zinc-verre.

7. Pièces moulées selon la revendication 1, caractérisées en ce que le liant thermoplastique (B) est choisi parmi des polymères cristallins liquides (LCP), du propionate de cellulose linéaire (LCD), des polyéthercétones (PEK), des polyétheréthercétones (PEEK), des polyéthersulfones (PES), des polyétherimides (PEI) et/ou des poly(sulfures de phénylène) (PPS).
